# EUROPÄISCHE PATENTSCHRIFT

(11) **EP 2 235 766 B1**
(45) Veröffentlichungstag und Bekanntmachung des Hinweises auf die Patenterteilung: **09.11.2011**
(21) Anmeldenummer: 08830103.1
(22) Anmeldetag: 08.09.2008
(51) Int. Cl.: H01M 2/16

(54) **VLIESSTOFF MIT PARTIKELFÜLLUNG**
NONWOVEN MATERIAL WITH PARTICLE FILLER
NONTISSÉ REMPLI DE PARTICULES

(30) Priorität: 07.09.2007 DE 102007042554; 25.01.2008 EP 08001406
(43) Veröffentlichungstag der Anmeldung: 06.10.2010
(73) Patentinhaber: Carl Freudenberg KG, 69469 Weinheim (DE)
(72) Erfinder: WEBER, Christoph, 69514 Laudenbach (DE); ROTH, Michael, 55118 Mainz (DE); KRITZER, Peter, 67147 Forst (DE); WAGNER, Rudolf, 79379 Müllheim (DE); SCHARFENBERGER, Gunter, 67227 Frankenthal (DE)
(86) Internationale Anmeldenummer: PCT/EP2008/007334
(87) Internationale Veröffentlichungsnummer: WO 2009/033627

(56) Entgegenhaltungen:
- EP-A- 1 724 395
- WO-A-2006/062153
- DE-A1- 3 125 751
- DE-A1- 3 605 981
- DE-A1- 10 238 944
- DE-A1- 10 347 568
- US-A1- 2005 208 383
- US-A1- 2006 008 700

## Beschreibung

### Technisches Gebiet

Die Erfindung betrifft eine Lage nach dem Oberbegriff des Patentanspruchs 1.

### Stand der Technik

Aus der DE 102 38 944 A1 ist eine Lage aus einem Vlies aus Polymerfasern bekannt, welches eine keramische Beschichtung aufweist. Aus der US 2005/0208383 A1 ist eine Lage bekannt, bei der ein poröser Körper mindestens einseitig mit einer Harzbeschichtung versehen ist. Die WO 2006/062153 A1 offenbart einen porösen Körper, in welchem Partikel und ein Harz aufgenommen sind. Aus der DE 103 47 568 A1 ist ein poröser Körper bekannt, der mit einer keramischen Beschichtung versehen ist. Die US 2006/0008700 A1 offenbart einen porösen Körper, der mit einer Mischung aus anorganischen Partikeln und einem Binderpolymer beschichtet ist. Die DE 31 25 751 A1 offenbart eine Lage, welche anorganische Partikel enthält. Diese Partikel werden gemeinsam mit Polyolefinzellstofffasern in einen Brei eingearbeitet. Schließlich offenbart die DE 36 05 981 A1 ein gattungsfernes Weichstoffflachdichtungsmaterial für Zylinderkopfdichtungen. Dieses umfasst einen porösen Körper, der anorganische Partikel, beispielsweise pyrogene Kieselsäure enthält.

Lagen der genannten Art sind aus dem Stand der Technik bereits bekannt. Solche Lagen werden als Separatoren in Batterien und Kondensatoren eingesetzt, die der Energiespeicherung dienen. Die Ladungsspeicherung in Batterien und Kondensatoren findet chemisch, physikalisch oder in einer Mischform, z. B. durch Chemisorption, statt.

Um eine interne Entladung innerhalb der Batterie oder des Kondensators zu vermeiden, werden entgegengesetzt geladene Elektroden mechanisch durch nicht elektronenleitende Materialien, so genannte Separatoren oder Spacer, voneinander getrennt. Zugleich ermöglichen die Separatoren oder Spacer auf Grund ihrer dem Energiespeichersystem und dessen Anwendung angepassten Porosität den Transport ionischer Ladungsträger eines Elektrolyten zwischen den Elektroden.

Die aus dem Stand der Technik bekannten Separatoren zeigen kleine, miteinander vernetzte Öffnungen im Mikrometerbereich. Diese Öffnungen sollen möglichst groß sein, damit die Elektrolytleitfähigkeit im getränkten Separator möglichst hoch ist und die Batterie somit eine hohe Leistungsdichte aufweist. Sind die Öffnungen jedoch zu groß, dann können Metalldendriten zu einem Kurzschluss zwischen den beiden eigentlich elektrisch voneinander zu trennenden Elektroden führen. Die Metalldendriten bestehen entweder aus Lithium oder aus anderen Metallen, die als Verunreinigungen in der Batterie vorliegen können.

Des Weiteren können Partikel aus elektrisch leitfähigen Elektrodenmaterialien durch die Öffnungen wandern. Auf Grund dieser Vorgänge kann ein Kurzschluss zwischen den Elektroden entstehen und die Selbstentladung der Batterie oder des Kondensators stark beschleunigt werden.

Bei einem Kurzschluss können lokal sehr hohe Ströme fließen, wodurch Wärme freigesetzt wird. Diese Wärme kann zum Schmelzen des Separators führen, wodurch wiederum die isolierende Wirkung des Separators deutlich nachlassen kann. Eine sich sehr schnell selbst entladende Batterie birgt dadurch auf Grund ihres hohen Energieinhaltes sowie der Brennbarkeit des Elektrolyten und anderer Bestandteile ein hohes Sicherheitsrisiko.

Ein weiterer Nachteil der aus dem Stand der Technik bekannten Separatoren ist deren mangelnde Beständigkeit bei steigenden Temperaturen. Der Schmelzpunkt bei Verwendung von Polyethylen liegt bei rund 130°C bzw. rund 150°C bei Verwendung von Polypropylen.

Als Ursachen für Kurzschlüsse können Schrumpf des Separators durch zu hohe Temperatur in der Batterie, Metalldendritenwachstum durch Reduktion von Metallionen (Lithium, Eisen, Mangan oder sonstige metallische Verunreinigungen), Abrieb von Elektrodenpartikeln, Schneidabrieb bzw. gebrochener Elektrodenbelag und unmittelbarer Kontakt der beiden flachen Elektroden unter Druck genannt werden.

In der EP 0 892 448 A2 ist der sogenannte "Shut down"-Mechanismus offenbart. Dieser wirkt bei lokaler Erwärmung durch beispielsweise einen Kurzschluss dessen flächiger Ausbreitung entgegen, indem die Ionenleitung in der Nähe des anfänglichen Kurzschlusses unterdrückt wird. Durch die Verlustwärme des Kurzschlusses wird Polyethylen so weit erhitzt, dass es schmilzt und die Poren des Separators verschließt. Höher schmelzendes Polypropylen bleibt mechanisch intakt.

Die US 2002/0168569 A1 beschreibt den Aufbau eines Separators bestehend aus Polyvinyldifluorid, welches im Herstellungsprozess mit einem Lösemittel angelöst, mit Siliziumdioxid-Partikeln vermengt und als dünner Film ausgebracht wird. Beim Entfernen des Lösemittels bleibt eine poröse Membran zurück.

Die WO 2006/068428 A1 beschreibt die Herstellung von Separatoren für Lithium-Ionen-Batterien unter Verwendung eines Polyolefin-Separators der zusätzlich mit gelartigen Polymeren und anorganischen Partikel gefüllt wird.

Die WO 2004/021475 A1 beschreibt den Einsatz von keramischen Partikeln, die über silizium-organische Haftvermittler und anorganische Bindemittel aus Oxiden der Elemente Silizium, Aluminium und/oder Zirkon zu einer dünnen Flächenware ausgeformt werden.

Um eine ausreichende mechanische Flexibilität einzustellen, werden die Keramikpartikel in ein Stützmaterial, beispielsweise einen Vliesstoff eingebracht. Dies offenbart die WO 2005/038959 A1.

Um Kurzschlüsse im Anfangsstadium der Metalldendritenbildung zu unterbinden, wird in der WO 2005/104269 A1 der Einsatz von niederschmelzenden Wachsen als Beimengung zu einer Keramikpaste beschrieben.

In der WO 2007/028662 A1 wird der Zusatz von Polymerpartikeln mit einem Schmelzpunkt von über 100° C zu keramischen Füllstoffen beschrieben, um die mechanischen Eigenschaften des Separators zu verbessern. Die beschriebenen Materialien sollen als Separator für Lithium-Ionen Materialien dienen. Obwohl mit diesen Separatoren eine höhere Temperaturbeständigkeit im Vergleich zu Membranen erzielt werden kann, können sie sich noch nicht kommerziell durchsetzen. Dies kann einerseits an den relativ hohen Kosten und andererseits an der zu hohen Materialdicke liegen, welche über 25 µm liegt.

Die WO 2000/024075 A1 beschreibt die Herstellung einer Membran, die in Brennstoffzellen eingesetzt werden kann. Diese besteht aus Glasfasermaterialien, in welchen mittels eines Silikatbinders Fluorkohlenwasserstoffpolymere fixiert werden.

Schließlich beschreibt die JP 2005268096 A einen Separator für Li-Ionen Batterien, der durch das Zusammenschmelzen von thermoplastischen Partikeln in einem Polyethylen/Polypropylen Faserstützmaterial durch Erhitzung dargestellt wird. Dieser besitzt eine blasenförmige Porenstruktur mit einem Porendurchmesser von 0.1 - 15 µm.

Der Stand der Technik zeigt jedoch keinen kostengünstigen Separator, der bei geringer Dicke eine hohe Porosität und eine hohe Temperaturstabilität zeigt und in Batterien mit hoher Leistungs- und Energiedichte über einen weiten Temperaturbereich bei hohen Sicherheitsanforderungen einsetzbar ist.

### Darstellung der Erfindung

Der Erfindung liegt daher die Aufgabe zu Grunde, eine Lage der eingangs genannten Art derart auszugestalten und weiterzubilden, dass sie nach kostengünstiger Fertigung bei geringer Dicke eine hohe Porosität und hohe Temperaturstabilität aufweist.

Die vorliegende Erfindung löst die zuvor genannte Aufgabe durch die Merkmale des Patentanspruchs 1.

Die Häufigkeitsverteilung der mittleren Porengrößen wird erfindungsgemäß derart eingestellt, dass mehr als 50 % der zweiten Poren mittlere Porengrößen zeigen, die unterhalb des mittleren Durchmessers der Partikel liegen. Erfindungsgemäß ist erkannt worden, dass die Porenstruktur eines kostengünstigen Vliesstoffs durch geeignete Anordnung und Auswahl von Partikeln modifiziert werden kann. Ganz konkret ist erkannt worden, dass die Porosität der erfindungsgemäßen Lage im Vergleich zu Polyolefin-Membranen gesteigert werden kann, ohne deren Stabilität zu vermindern. Die Anordnung einer Vielzahl von Partikeln, deren mittlerer Durchmesser größer als die mittlere Porengröße der Mehrzahl der zweiten Poren im befüllten Bereich ist, erlaubt die Ausbildung einer hohen Porosität und damit eine begünstigte Elektrolyt-Aufnahme durch den Vliesstoff. Zugleich wird eine Porenstruktur geschaffen, in der sich nahezu keine schädlichen Metalldendriten ausbilden können. Durch die erfindungsgemäße Anordnung der Partikel kann eine Porenstruktur erzeugt werden, die nicht blasenartig, sondern labyrinthartig ist und gestreckte Poren aufweist. Bei einer solchen Parenstruktur können sich dendritartige Durchwachsungen nahezu nicht von einer Seite der Lage zur anderen Seite durchgängig ausbilden. Insoweit werden Kurzschlüsse in Batterien oder Kondensatoren wirksam verhindert. Die erfindungsgemäße Lage eignet sich daher besonders als Separator für Batterien und Kondensatoren mit hoher Leistungs- und Energiedichte. Die erfindungsgemäße Lage ist über einen weiten Temperaturbereich bei hohen Sicherheitsanforderungen einsetzbar.

Der Grundkörper weist eine Beschichtung aus den Partikeln auf. Eine Beschichtung bewirkt ebenfalls vorteilhaft die zuvor genannte Unterdrückung von Kurzschlüssen. Wenn eine Lage mit einer Beschichtung versehen ist, tritt zwangsläufig ein Grenzbereich am Grundkörper auf, der zumindest teilweise mit Partikeln gefüllt ist.

Die Partikel bestehen aus organischen Polymeren.

Das Flächengewicht der erfindungsgemäßen Lage liegt zwischen 10 und 60, insbesondere zwischen 15 und 50 g/m².

Durch eine Kalandrierung wird die Lage mechanisch verfestigt. Die Kalandrierung bewirkt eine Reduzierung der Oberflächenrauhigkeit. Die an der Oberfläche des Vliesstoffs eingesetzten Partikel zeigen nach der Kalandrierung Abplattungen.

Folglich ist die eingangs genannte Aufgabe gelöst.

Die Partikel könnten kugelförmig sein. Hierdurch kann vorteilhaft eine überwiegend dichteste Kugelpackung in den ersten Poren des Vliesstoffs erzeugt werden. Die mittlere Porengröße der Mehrzahl der zweiten Poren wird im wesentlichen durch die geometrischen Verhältnisse in Kugelpackungen bestimmt. Es gibt unendlich viele Möglichkeiten, eine dichteste Kugelpackung herzustellen. Gemein ist ihnen, dass sie aus hexagonalen Kugel-Schichten bestehen. Die zwei wichtigsten Vertreter sind die hexagonal dichteste Kugelpackung (Schichtfolge A, B, A, B, A, B) und die kubisch dichteste Kugelpackung (Schichtfolge A, B, C, A, B, C, A). Die kubisch dichteste Kugelpackung wird auch kubisch flächenzentrierte Kugelpackung genannt. In einer dichtesten Kugelpackung hat jede Kugel 12 nächste Nachbarn, sechs in der eigenen Schicht, sowie drei je darüber und darunter. Sie bilden bei der kubischen Packung einen Kuboktaeder, bei der hexagonalen einen Antikuboktaeder. Der Raumfüllungsgrad einer dichtesten Kugelpackung beträgt 74%. Es wird jedoch angestrebt, eine möglichst hohe Porosität zu erzeugen. Daher werden nicht alle Partikel in den ersten Poren des Vliesstoffs eine dichteste Kugelpackung ausbilden. Vielmehr werden auch Zonen loser Schüttung der Partikel auftreten, wodurch eine hohe Porosität begünstigt wird.

In einer weiteren Ausführungsform der Erfindung sind die Partikel nicht kugelförmig, oder es ist ein Anteil von nicht kugelförmigen Partikeln enthalten. Diese Ausführungsform betrifft insbesondere den Einsatz von anorganischen Partikeln. Diese weisen häufig eine unregelmäßige, zerklüftete Form mit Ecken und Kanten auf. Solchen Partikel können auch kugelförmigen Partikeln zugemischt werden, beispielsweise in einem Anteil von bis 10, 20 oder 50 Gew.-%. Auf diese Art können die Eigenschaften der Partikel in vorteilhafter Weise kombiniert werden.

Die Partikel könnten im Grundkörper flächig homogen verteilt sein. Durch diese konkrete Ausgestaltung können Kurzschlüsse besonders wirksam verhindert werden. Metalldendriten und Abrieb können durch eine homogen belegte Fläche nahezu nicht hindurchwandem. Des Weiteren wird der unmittelbare Kontakt von Elektroden bei Druckbeaufschlagung durch eine solche Fläche vermieden. Vor diesem Hintergrund ist konkret denkbar, dass sämtliche erste Poren des Vliesstoffes homogen derart mit den Partikeln ausgefüllt sind, dass die Lage vorwiegend mittlere Porengrößen zeigt, die kleiner sind als die mittleren Durchmesser der Partikel.

Die Partikel könnten durch einen Binder mit dem Vliesstoff bzw. untereinander verbunden sein. Dabei könnte der Binder aus organischen Polymeren bestehen. Die Verwendung eines Binders aus organischen Polymeren erlaubt es, eine Lage mit ausreichender mechanischer Flexibilität herzustellen. Ausgezeichnete Bindereigenschaften zeigt überraschenderweise Polyvinylpyrrolidon.

In bevorzugten Ausführungsformen der Erfindung ist der Binder ein Polyester, Polyamid, Polyether, Polycarboxylate, eine Polycarbonsäure, eine Polyvinylverbindung, ein Polyolefin, ein Kautschuk, ein halogeniertes Polymer und/oder ein ungesättigtes Polymer.

Die Binder können in Form von Homopolymeren oder als Copolymere eingesetzt werden. Als Copolymere sind beispielsweise statistische Copolymere, Gradientencopolymere, alternierende Copolymere, Blockcopolymere oder Propfpolymere geeignet. Die Copolymere können aus zwei, drei, vier oder mehr verschiedenen Monomeren bestehen (Terpolymere, Tetrapolymere).

Bevorzugt könnten thermoplastische, elastomere und/oder duroplastische Binder verwendet werden. Beispielhaft seien vor diesem Hintergrund Polyvinylpyrrlidon, Polyacrylsäure, Polyacrylate, Polymethacrylsäure, Polymethacrylate, Polystyrol, Polyvinylalkohol, Polyvinylacetat, Polyacrylamid. Polyvinylidenfluorid und Copolymere aus den vorgenannten, Cellulose und deren Derivate, Polyether, Phenolharze, Melaminharze, Polyurethane, Nitrilkautschuk (NBR), Styrolbutadienkautschuk (SBR) sowie Latex genannt.

In einer bevorzugten Ausführungsform ist der Binder ein ungesättigtes Polymer. Die ungesättigten Gruppen können dabei beispielsweise Kohlenstoff-Kohlenstoff-Doppel- oder Dreifachbindungen oder Kohlenstoff-Stickstoff-Doppel- oder Dreifachbindungen sein. Bevorzugt sind C=C Doppelbindungen. Diese können gleichmäßig in dem Polymer verteilt sein, wie beispielsweise bei durch Polymerisation von Dienen erhältlichen Polymeren. Solche Polymere können auch teilweise hydriert sein. Alternativ können Polymergrundgerüste mit Resten gekoppelt werden, die ungesättigte Gruppen enthalten. Ungesättigte Polymere zeichnen sich im Allgemeinen durch gute Klebeeigenschaften aus.

In einer bevorzugten Ausführungsform der Erfindung ist der Binder ein Polyvinylether. Geeignete Monomerbausteine sind beispielsweise Methyl-, Ethyl-, Propyl-, Isopropyl-, Butyl-, Isobutyl-, Hexyl-, Octyl-, Decyl-, Dodecyl-, 2-Ethylhexyl-, Cyclohexyl-, Benzyl-, Trifluormethyl-, Hexafluorpropyl- oder Tetrafluorpropylvinylether. Dabei können beispielsweise Homopolymere oder Copolymere, insbesondere Blockcopolymere, eingesetzt werden. Die Copolymere können aus verschiedenen monomeren Vinylethern bestehen oder Copolymere aus Vinylethermonomeren mit anderen Monomeren sein. Polyvinylether sind als Binder besonders geeignet, das sie sehr gute Klebe-und Haftungseigenschaften aufweisen.

In einer bevorzugten Ausführungsform der Erfindung ist der Binder ein fluoriertes oder halogeniertes Polymer. Dieses kann beispielsweise aus Vinylidenfluorid (VDF), Hexafluorpropylen (HFP) oder Chlortrifluorethylen (CTFE) hergestellt sein oder solche Monomerbausteine enthalten. Dabei können beispielsweise Homopolymere oder Copolymere, insbesondere Blockcopolymere eingesetzt werden. Die Copolymere können aus verschiedenen halogenierten Monomeren bestehen oder Copolymere aus halogenierten Monomeren mit anderen Monomeren sein. Die Polymere und Monomere können vollständig fluoriert oder chloriert oder teilweise fluoriert oder chloriert sein. In einer besonderen Ausführungsform der Erfindung beträgt der Comonomeranteil der halogenierten Monomere, insbesondere von HFP und CTFE, an dem gesamten Polymer zwischen 1 bis 25 Gew.-%. Halogenierte Polymere zeichnen sich im allgemeinen durch ein hohe Temperaturbeständigkeit und Chemikalienbeständigkeit sowie durch eine gute Benetzbarkeit aus. Sie sind besonders als Binder geeignet, wenn fluorierte oder teilfluorierte Partikel zur Füllung des Vlieses verwendet werden. Durch den Einsatz von Copolymeren können die Temperaturbeständigkeit und die Verarbeitungstemperatur über einen breiten Temperaturbereich variiert werden. Dadurch kann die Verarbeitungstemperatur des Binders an die Schmelztemperatur der Partikel angepasst werden.

In einer weiteren Ausführungsform der Erfindung ist der Binder eine Polyvinylverbindung. Geeignet sind insbesondere solche, die aus N-Vinylamidmonomeren wie N-Vinylformamid und N-Vinylacetamid bestehen oder diese Monomere enthalten. Geeignet sind insbesondere die entsprechenden Homopolymere und Copolymere, wie Blockcopolymere. Die Poly-N-Vinylverbindungen zeichnen sich durch eine gute Benetzbarkeit aus.

In einer bevorzugten Ausführungsform der Erfindung ist der Binder ein Kautschuk. Es sind allgemein bekannte Kautschuke einsetzbar, wie Ethylen-Propylen-Dien-Kautschuk (EPDM-Kautschuk). Insbesondere EPDM-Kautschuk weist eine hohe Elastizität und eine gute chemische Beständigkeit insbesondere gegenüber polaren organischen Medien auf und ist über einen breiten Temperaturbereich einsetzbar. Es können auch Kautschuke eingesetzt werden, ausgewählt aus Naturkautschuk, Isopren-Kautschuk, Butadien-Kautschuk, Chloropren-Kautschuk, Styrol-Butadien-Kautschuk oder Nitril-Butadien-Kautschuk. Diese Kautschuke enthalten ungesättigte Doppelbindungen und werden als R-Kautschuke bezeichnet. Sie zeichnen sich durch eine gute Klebewirkung aus. Dabei können beispielsweise Homopolymere oder Copolymere, insbesondere Blockcopolymere eingesetzt werden.

Es sind auch fluorierte Kautschuke einsetzbar, wie Perfluorkautschuk (FFKM), Fluor-Kautschuk (FKM) oder Propylen-Tetrafluorethylen-Kautschuk (FPM), sowie Copolymere davon. Besonders bevorzugt ist FFKM. Diese Binder, insbesondere FFKM, zeichnen sich durch einen hohen Temperatureinsatzbereich, sehr gute Medien- und Chemikalienbeständigkeit und sehr geringe Quellung aus. Sie sind daher insbesondere für Anwendungen in aggressiver Umgebung bei hohen Temperaturen geeignet, wie in Brennstoffzellen.

In einer bevorzugten Ausführungsform der Erfindung ist der Binder ein Polyester oder ein Polyamid oder ein Copolymer davon. Die Copolymere können aus verschiedenen Polyamid und/oder Polyester-Monomeren bestehen oder Copolymere aus solchen Monomeren mit anderen Monomeren sein. Solche Binder zeichnen sich durch sehr gute Haftungseigenschaften aus.

Der Binder kann auch Silicium-haltige und/oder Silicium-organische Polymere enthalten. In einer Ausführungsform werden Siloxane als Binder eingesetzt. In einer weiteren Ausführungsform werden Silylverbindungen und/oder Silane als Binder eingesetzt. Diese Binder, insbesondere Silylverbindungen und/oder Silane, werden bevorzugt eingesetzt, wenn die Partikel (3) vollständig oder zumindest zum Teil organische Partikel sind.

Der Schmelzpunkt des Binders und/oder der Partikel könnte unter den Schmelzpunkten der Fasern des Vliesstoffs liegen. Durch die Auswahl eines solchen Binders/Partikel kann die Lage einen so genannten "Shut-Down-Mechanismus" realisieren. Bei einem "Shut-Down-Mechanismus" verschließen die aufschmelzenden Partikel und/oder der Binder die Poren des Vliesstoffs, so dass keine dendritartigen Durchwachsungen durch die Poren und somit Kurzschlüsse auftreten können.

Vor diesem Hintergrund ist denkbar, dass Mischungen aus Partikeln mit unterschiedlichen Schmelzpunkten verwendet werden. Hierdurch kann ein schrittweises oder stufenweises Verschließen der Poren mit zunehmender Temperatur bewirkt werden.

Die Partikel könnten einen mittleren Durchmesser im Bereich von 0,01 bis 10 µm aufweisen. Die Auswahl des mittleren Durchmessers aus diesem Bereich hat sich als besonders vorteilhaft erwiesen, um Kurzschlüsse durch Ausbildung von dendritartigen Durchwachsungen oder Abrieb zu vermeiden.

Geeignete Polymere sind beispielsweise Polyacetale, Polycycloolefin-Copolymere, Polyester, Polyimide, Polyetherketone, Polycarbonsäuren, Polycarboxylate, Kautschuke und halogenierte Polymere.

Die organischen Polymere können Homopolymere oder Copolymere sein. Als Copolymere sind beispielsweise statistische Copolymere, Gradientencopolymere, alternierende Copolymere, Blockcopolymere oder Propfpolymere geeignet. Die Copolymere können aus zwei, drei oder mehr verschiedenen Monomeren bestehen (Terpolymere, Tetrapolymere). Die genannten Materialien können auch in Form von Gemischen zu Partikeln verarbeitet werden. Allgemein sind thermoplastische Polymere und Polymergemische einsetzbar oder vernetzte Polymere und Polymergemische, wie Elastomere oder Duroplaste.

Die Partikel können insbesondere aus Polypropylen, Polyvinylpyrrolidon, Polyvinylidenfluorid, Polyester, Polytetrafluorethylen (PTFE), Perfluor-Ethylen-Propylen (FEP), Polystyrol, Styrolbutadiencopolymeren, Polyacrylaten oder Nitrilbutadienpolymeren sowie Copolymeren der zuvor genannten Polymere gefertigt sein. Besonders bevorzugt sind Homopolymere, Copolymere oder Blockcopolymere des Vinylidenfluorids (VDF), des Polytetrafluorethylens (PTFE) und des Polyoxymethylens (POM, auch Polyacetal oder Polyformaldehyd genannt).

In einer bevorzugten Ausführungsform der Erfindung bestehen die Partikel aus Polyacetalen, wie Polyoxymethylen (POM), oder die Partikel enthalten Polyacetale. Es können auch Copolymere von Acetalen eingesetzt werden, beispielsweise mit Trioxan als Comonomer. Polyacetale zeichnen sich durch eine ausgezeichnete Form- und Temperaturbeständigkeit aus. Sie weisen außerdem nur eine geringe Wasseraufnahme auf. Dies ist erfindungsgemäß vorteilhaft, da der gefüllte Vliesstoff insgesamt dann nur wenig Wasser aufnimmt.

In einer weiteren Ausführungsform der Erfindung bestehen die Partikel aus Cyclo-Olefin-Copolymeren (COC) oder enthalten diese. Die thermischen Eigenschaften von COC lassen sich durch Veränderung der Einbauverhältnisse von zyklischen und linearen Olefinen in einem weiten Bereich gezielt verändern und damit an die gewünschten Einsatzbereiche anpassen. Im Wesentlichen kann damit die Wärmeformbeständigkeit in einem Bereich von 65 bis 175 °C eingestellt werden. Die COC zeichnen sich durch eine äußerst geringe Wasseraufnahme und sehr gute elektrische Isolationseigenschaften aus.

In einer weiteren Ausführungsform der Erfindung bestehen die Partikel aus Polyestern oder enthalten diese. Bevorzugt sind insbesondere flüssigkristalline Polyester (LCP). Diese werden beispielsweise unter der Handelsbezeichnung "Vectra LCP" von der Firma Ticona angeboten. Flüssigkristalline Polyester zeichnen sich durch eine hohe Dimensionsstabilität, hohe Temperaturbeständigkeit und gute Chemikalienbeständigkeit aus.

In einer weiteren Ausführungsform der Erfindung bestehen die Partikel aus Polyimiden (PI) oder Copolymeren davon, oder enthalten diese. Geeignete Copolymere sind beispielsweise Polyetherimide (PEI) und Polyamidimide (PAI). Der Einsatz von Polyimiden ist vorteilhaft, weil sie eine hohe mechanische Festigkeit und eine hohe Temperaturbeständigkeit aufweisen. Sie zeigen außerdem gute Oberflächeneigenschaften, die sich gezielt von hydrophil bis hydrophob einstellen lassen.

In einer weiteren Ausführungsform der Erfindung bestehen die Partikel aus Polyetherketonen (PEK) oder Copolymeren davon oder enthalten diese. Insbesondere geeignet sind Polyetheretherketone (PEEK). Polyetherketone sind hochtemperaturstabil und sehr chemikalienbeständig.

In einer weiteren Ausführungsform der Erfindung bestehen die Partikel aus Polycarbonsäuren oder Polycarboxylaten oder Copolymeren davon, oder sie enthalten diese. Geeignet sind insbesondere Homopolymere und Copolymere, insbesondere Blockcopolymere. Die Polymere sind insbesondere hergestellt aus Methacrylsäure, Methacrylaten, Methacrylamiden und Methacrylsäureestern, wie z. B. Methyl-, Ethyl-, Propyl-, Butyl-, Hexyl-, 2-Ethylhexyl-, Stearyl-, Lauryl-, Cyclohexyl-, Benzyl-, Trifluormethyl-, Hexafluorpropyl-, Tetrafluorpropylmethacrylaten, -methacrylamiden und -methacrylsäure. Auch die entsprechenden Acrylate, Acrylamide und Acrylsäureverbindungen sind einsetzbar. Durch die Verwendung dieser Homo- und Copolymere lassen sich die gewünschten thermischen Eigenschaften, so z.B. der Shut Down des Separators, die Adhäsion zu dem Vliesstoff und zu dem Binder sowie die Benetzungseigenschaften der Partikel gezielt einstellen.

In einer weiteren Ausführungsform der Erfindung bestehen die Partikel aus Kautschuk oder enthalten einen Kautschuk. Die Kautschuke sind vorzugsweise vernetzt. Es sind allgemein bekannte Kautschuke einsetzbar, wie Ethylen-Propylen-Dien-Kautschuk (EPDM-Kautschuk). Insbesondere EPDM-Kautschuk weist eine hohe Elastizität und eine gute chemische Beständigkeit insbesondere gegenüber polaren organischen Medien auf und ist über einen breiten Temperaturbereich einsetzbar. Es können beispielsweise auch Kautschuke eingesetzt werden ausgewählt aus Naturkautschuk, Isopren-Kautschuk, Butadien-Kautschuk, Chloropren-Kautschuk, Styrol-Butadien-Kautschuk und Nitril-Butadien-Kautschuk. Die Polymere dieser Kautschuke enthalten vernetzbare ungesättigte Doppelbindungen und werden als R-Kautschuke bezeichnet. Diese Kautschuke sind bevorzugt vernetzt. Sie können beispielsweise als Homopolymere oder Copolymere, insbesondere Blockcopolymere, eingesetzt werden.

Es sind auch fluorierte Kautschuke einsetzbar, wie Perfluorkautschuk (FFKM), Fluor-Kautschuk (FKM) oder Propylen-Tetrafluorethylen-Kautschuk (FPM), sowie Copolymere davon. Besonders bevorzugt ist FFKM. Diese Binder, insbesondere FFKM, zeichnen sich durch einen hohen Temperatureinsatzbereich, sehr gute Medien- und Chemikalienbeständigkeit und sehr geringe Quellung aus. Sie sind daher insbesondere für Anwendungen in aggressiver Umgebung bei hohen Temperaturen geeignet, wie in Brennstoffzellen.

In einer bevorzugten Ausführungsform der Erfindung bestehen die Partikel aus oder enthalten ein fluoriertes oder halogeniertes Polymer. Dieses kann beispielsweise aus Vinylidenfluorid (VDF), Polytetrafluorethylen (PTFE), Hexafluorpropylen (HFP) oder Chlortrifluorethylen (CTFE) hergestellt sein. Dabei können beispielsweise Homopolymere oder Copolymere, insbesondere Blockcopolymere eingesetzt werden. Die Copolymere können aus verschiedenen halogenierten Monomeren bestehen oder Copolymere aus halogenierten Monomeren mit anderen Monomeren sein. Die Polymere und Monomere können vollständig fluoriert oder chloriert oder teilweise fluoriert oder chloriert sein. In einer besonderen Ausführungsform der Erfindung beträgt der Comonomeranteil der halogenierten Monomere, insbesondere von HFP und CTFE, an dem gesamten Polymer zwischen 1 bis 25 Gew. %. Die halogenierten Polymere zeichnen sich durch ein hohe Temperaturbeständigkeit und Chemikalienbeständigkeit sowie durch eine gute Benetzbarkeit aus. Sie sind besonders zur Verwendung mit fluorierten oder teilfluorierten Bindern geeignet. Durch den Einsatz und die Auswahl von Copolymeren können die Temperaturbeständigkeit und die Verarbeitungstemperatur über einen breiten Temperaturbereich variiert werden. Dadurch kann die Verarbeitungstemperatur des Binders an die Schmelztemperatur der Partikel angepasst werden. Außerdem wird die Einstellung einer Shut-Down-Temperatur ermöglicht.

Besonders bevorzugt ist die Verwendung eines Copolymers aus PTFE und Perfluoro-3,6-dioxa-4-methyl-7-octen-sulfonsäure (PFSA). Dieses ist unter der Handelsbezeichnung Nafion von der Firma Dupont erhältlich. Es ist erfindungsgemäß vorteilhaft, weil es eine gute Kationen- und Protonenleitfähigkeit aufweist.

Die Verwendung organischer Polymere für die Partikel erlaubt ein problemloses Aufschmelzen der Partikel zur Erzielung eines "Shut-Down-Effektes". Des Weiteren kann eine Lage gefertigt werden, die sich problemlos zuschneiden lässt, ohne zu zerbröseln. Ein Zerbröseln der Lage tritt meist dann auf, wenn ein relativ hoher Anteil an anorganischen Partikeln in der Lage vorliegt. Vor diesem Hintergrund ist denkbar, Mischungen unterschiedlicher Partikel oder Core-Sheil-Partikel zu verwenden. Hierdurch kann ein schrittweises oder stufenweises Verschließen der Poren mit zunehmender Temperatur bewirkt werden.

Die erfindungsgemäß einsetzbaren Binder und Partikel, insbesondere die organischen Partikel, sind bevorzugt in hohem Maße temperaturbeständig. Vorzugsweise sind die Binder und/oder Partikel bei Temperaturen von 100, 150, 175 oder 200 °C beständig. Dies ermöglicht den Einsatz in Brennstoffzellen.

Der erfindungsgemäße Vliesstoff ist im Gegensatz zu bekannten Vliesstoffen ohne anorganische Partikel herstellbar. In der Erfindung sind keine anorganischen Partikel oder Partikel mit anorganischen Bestandteilen enthalten.

Die erfindungsgemäß einsetzbaren Partikel können nach bekannten Methoden hergestellt werden. So sind Verfahren bekannt, bei denen geeignete, insbesondere kugelförmige, Partikel bereits als Reaktionsprodukt der Polymerisation erhalten werden. Bevorzugte Verfahren sind die Emulsions-oder Dispersionspolymerisation.

In einer weiteren Ausführungsform werden die Partikel durch Weiterverarbeitung von Polymeren erhalten. Beispielsweise können Polymergranulate gemahlen werden. Gegebenenfalls werden anschließend Trennverfahren eingesetzt, wie das Sieben, um die gewünschte Größenverteilung zu erhalten. Die Partikel können aus Mischungen unterschiedlicher Partikelgrößen bestehen. Dadurch lässt sich die Porosität und die Porengrößenverteilung variieren.

Die Fasern des Vliesstoffs könnten aus organischen Polymeren, insbesondere aus Polybutylterephtalat, Polyethylenterephtalat, Polyacrylnitril, Polyvinylidenfluorid, Polyetheretherketonen, Polyethylennaphtalat, Polysulfonen, Polyimid, Polyester, Polypropylen, Polyoxymethylen, Polyamid oder Polyvinylpyrrolidon gefertigt sein. Denkbar ist auch, Bikomponentenfasem einzusetzen, welche die zuvor genannten Polymere aufweisen. Die Verwendung dieser organischen Polymere erlaubt es, eine Lage herzustellen, die nur einen geringen thermischen Schrumpf zeigt. Des Weiteren sind diese Materialien weitgehend elektrochemisch stabil gegenüber den in Batterien und Kondensatoren eingesetzten Elektrolyten und Gasen.

Die mittlere Länge der Fasern des Vliesstoffs könnte deren mittleren Durchmesser um mindestens das zweifache, vorzugsweise ein Vielfaches übersteigen. Durch diese konkrete Ausgestaltung kann ein besonders reißfester Vliesstoff gefertigt werden, da die Fasern miteinander verschlungen werden können.

Mindestens 90% der Fasern des Vliesstoffs könnten einen mittleren Durchmesser von höchstens 12 µm aufweisen. Diese konkrete Ausgestaltung erlaubt den Aufbau einer Lage mit relativ geringen Porengrößen der ersten Poren. Eine noch feinere Porosität kann dadurch erzielt werden, dass mindestens 40% der Fasern des Vliesstoffs einen mittleren Durchmesser von höchstens 8 µm aufweisen.

Die Lage könnte durch eine Dicke von höchstens 100 µm gekennzeichnet sein. Eine Lage dieser Dicke lässt sich noch problemlos aufwickeln und erlaubt einen sehr sicheren Batteriebetrieb. Bevorzugt könnte die Dicke höchstens 60 µm betragen. Diese Dicke erlaubt eine verbesserte Aufwickelbarkeit und dennoch einen sicheren Batteriebetrieb. Besonders bevorzugt könnte die Dicke höchstens 25 µm betragen. Mit Lagen einer solchen Dicke können sehr kompakt bauende Batterien und Kondensatoren gebaut werden. In weiteren Ausführungsformen ist die Dicke mindestens 3, 5 oder 10 µm, insbesondere zwischen 5 und 100 oder zwischen 10 und 60 µm.

Die Lage könnte eine Porosität von mindestens 25 % aufweisen. Eine Lage dieser Porosität unterdrückt aufgrund ihrer Materialdichte besonders effektiv die Ausbildung von Kurzschlüssen. Bevorzugt könnte die Lage eine Porosität von mindestens 35 % aufweisen. Durch eine Lage dieser Porosität kann eine Batterie mit hoher Leistungsdichte erzeugt werden. Die hier beschriebene Lage zeigt bei hoher Porosität dennoch sehr kleine zweite Poren, so dass sich keine dendritartigen Durchwachsungen von einer Seite zur anderen Seite der Lage ausbilden können. Vor diesem Hintergrund ist denkbar, dass die zweiten Poren ein labyrinthartiges Gefüge ausbilden, in dem sich keine dendritartigen Durchwachsungen von einer Seite zur anderen Seite der Lage ausbilden können. In einer weiteren Ausführungsform liegt die Porosität zwischen 25 und 70, insbesondere zwischen 35 und 60%.

Die Lage könnte Porengrößen von höchstens 3 µm aufweisen. Die Auswahl dieser Porengröße hat sich als besonders vorteilhaft erwiesen, um Kurzschlüsse zu vermeiden. Besonders bevorzugt könnten die Porengrößen höchstens 1 µm betragen. Eine solche Lage vermeidet besonders vorteilhaft Kurzschlüsse durch Metalldendritenwachstum, durch Abrieb aus Elektrodenpartikeln und durch unmittelbaren Kontakt der Elektroden bei Druckbeaufschlagung.

Die Lage könnte eine Höchstzugkraft in Längsrichtung von mindestens 15 Newton/5cm zeigen. Eine Lage dieser Festigkeit lässt sich besonders problemlos auf die Elektroden einer Batterie aufwickeln, ohne zu zerreißen.

Gegenstand der Erfindung ist auch ein Verfahren zur Herstellung einer erfindungsgemäßen Lage. Dabei wird zunächst eine Lösung oder Dispersion der Partikel (3) und gegebenenfalls eines Binders hergestellt. Die Fasern (1) des Vliesstoffes werden mit der Dispersion beschichtet. Anschließend wird der beschichtete Vliesstoff gegebenenfalls getrocknet und/oder erwärmt

In einer bevorzugten Ausführungsform der Erfindung wird zunächst eine Dispersion hergestellt Diese enthält den Binder, die Partikel und gegebenenfalls weitere Additive.

Die Additive können so ausgewählt werden, dass sie die Rheologie und damit die Verarbeitung und/oder die Stabilität der Dispersion beeinflussen. Es können übliche Dispersionsadditive wie Säuren, Basen, Tenside, beispielsweise ionische oder nichtionische Tenside, Polymere, wie Polyacrylate, Oligoether, Polyether und Polyelektrolyte eingesetzt werden. Die eingesetzten Partikel können bereits nach ihrer Herstellung als Dispersion vorliegen oder werden vom Hersteller in Form einer Dispersion zur Verfügung gestellt. Gegebenenfalls müssen sie zunächst dispergiert werden. Dabei können gängige Dispergierungshilfsmittel, wie Tenside und Emulgatoren, eingesetzt werden.

Zu der Herstellung der Dispersion werden die Komponenten zusammengegeben und unter Rühren und gegebenenfalls unter Erwärmen homogenisiert. Die Dispersion ist vorzugsweise eine wässrige Dispersion. Es kann jedoch auch eine Dispersion in einem Lösungsmittel eingesetzt werden, oder in einem Wasser/Lösungsmittel-Gemisch. Der Feststoffgehalt der Dispersion liegt vorzugsweise zwischen 5 bis 70, bevorzugt 20 bis 65, und besonders bevorzugt 25 und 55 Gew.-%.

Die Dispersion kann nach bekannten Beschichtungsverfahren auf den Vliesstoff aufgebracht werden. In besonderen Ausführungsformen wird ein Vliesstoff, bevorzugt kontinuierlich oder auch semi-kontinuierlich, mit gängigen Beschichtungsverfahren beschichtet. Geeignete Verfahren sind beispielsweise Rakeln, Sprühen, Walzen, Vorhangsbeschichtung (Curtain Coating), Roller Systemen wie z.B. 2,3 & 5 Roller Systemen, 3 Roller Combi Systemen, Micro Roller Systemen, Reverse Roll Systemen, Engraved Roller Systemen, Dipping Systemen, Slot Die Systemen, Knife Systemen, Double Side Systemen, Commabar Systemen, Schaumauftrag, oder bevorzugt Imprägnieren. Die Beschichtungsgeschwindigkeit kann dabei 0,5 bis 1000 oder 0,5 bis 200 m/min betragen, bevorzugt 20 bis 200 oder 20 bis 1000 m/min, und besonders bevorzugt zwischen 50 und 200 oder 50 bis 100 m/min. Anschließend wird der beschichtete Vliesstoff bevorzugt getrocknet und gegebenenfalls verfestigt. Die Beschichtung kann bei 50 bis 500 °C oder 50 bis 200°C, bevorzugt 100 bis 200°C und besonders bevorzugt zwischen 120 und 200°C getrocknet werden. Das Erwärmen und/oder das Trocknen kann sowohl im Kontakt (Kalandrieren, Trommeltrockner) als auch kontaktfrei (Warmluft, Heißluft, IR-Strahlung, Mikrowellen) oder durch andere Erwärmungsmethoden nach dem Stand der Technik erfolgen.

Die hier beschriebene Lage kann insbesondere in Batterien und Kondensatoren als Separator eingesetzt werden, da sie Kurzschlüsse besonders wirksam verhindert.

Sie kann auch in Brennstoffzellen als Gasdiffusionsschicht oder Membran Verwendung finden, da sie gute Benetzungseigenschaften zeigt und Flüssigkeiten transportieren kann.

Es gibt nun verschiedene Möglichkeiten, die Lehre der vorliegenden Erfindung in vorteilhafter Weise auszugestalten und weiterzubilden. Dazu ist einerseits auf die nachgeordneten Patentansprüche, andererseits auf die nachfolgende Erläuterung eines bevorzugten Ausführungsbeispiels der Erfindung anhand der Zeichnung zu verweisen.

In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: eine Rasterelektronenmikroskop-Aufnahme einer Lage, in welcher die Partikel in ersten Poren eines Vliesstoffs vorliegen und einen porösen mit Partikeln befüllten Bereich ausbilden,
- Fig. 2: eine Rasterelektronenmikroskop-Aufnahme der Partikel eines befüllten Bereichs, der als Beschichtung ausgebildet ist, und
- Fig. 3: eine stark vergrößerte Rasterelektronenmikroskop-Aufnahme der Partikel eines befüllten Bereichs.

### Ausführung der Erfindung

### Messmethoden:

In den Ausführunsbeispielen wurden die folgenden Messmethoden verwendet:
Die mittlere Porengröße wurde nach ASTME E 1294 (Prüfverfahren für die Merkmale der Porengröße von Membranfiltern unter Verwendung eines automatischen Flüssigkeits-Porositätsmessgerätes) bestimmt.

Für die Bestimmung des Flächengewichtes wurden jeweils 3 100x100mm große Proben ausgestanzt, die Proben gewogen und der Messwert mit 100 multipliziert.

Die Dicken wurden mit einem Präzisions-Dickenmessgerät Modell 2000 U/ Elektrik gemessen. Die Messfläche betrug 2cm², der Messdruck 1000 cN/cm².

Die Porosität wurde aus der Dicken, dem Gewicht und den Dichten der verwendeten Materialien berechnet.

Für die Bestimmung des Schrumpfes wurden 100x100mm große Muster ausgestanzt und 10 Minuten bei 120°C in einem Labdryer der Fa. Mathis gelagert. Im Anschluss wurde der Schrumpf der Muster bestimmt.

### Vergleichsbeispiel 1

Zu 200 Teilen einer 60 % PTFE Dispersion (Dyneon TF 5032R, Fa. 3M, mittlere Partikelgröße 160 nm) wurde unter ständigem Rühren 50 Teile einer CMC (Carboxymethylcellulose) Lösung gegeben. Daraufhin wurden 13,3 Teile einer 40% SBR (Styrolbutadienrubber)Dispersion und 50 Teile deionisiertes Wasser, ebenfalls unter Rühren, hinzugefügt. Die Lösung wurde 2 Stunden gerührt und mindestens 24 Stunden auf Stabilität getestet. Die Viskosität der erhaltenen Lösung betrug 200 cP bei einem pH-Wert von 9,5.

### Beschichtung

Ein 30x49,5 cm großer PET-Vliesstoff (Dicke: 20 µm, Flächengewicht: 11,6 g/m²) wurde mit obiger Lösung getränkt, durch ein Presswalzwerk geführt (Geschwindigkeit ca. 1 m/min, 0,7 bar Druck) und bei 120°C getrocknet.
Es wurde ein imprägnierter Vliesstoff mit einem Flächengewicht von 23 g/m² und einer Dicke von 27 □m erhalten. Die berechnete Porosität betrug 50,3%.

### Vergleichsbeispiel 2

Zu 200 Teilen einer 60 % PTFE Dispersion (Dyneon TF 5032R, Fa. 3M, mittlere Partikelgröße 160 nm) wurden unter ständigem Rühren 100 Teile einer 1% CMC (Carboxymethylcellulose) Lösung gegeben. Daraufhin wurden 10 Teile einer wässrigen SBR (Styrolbutadienrubber)Dispersion (40% Feststoffanteil, Partikelgröße 120 nm) unter Rühren hinzugefügt. Die Lösung wurde 2 Stunden gerührt und mindestens 24 Stunden auf Stabilität getestet. Die Viskosität der erhaltenen Lösung betrug 17000 cP bei einem pH-Wert von 9,8.

### Beschichtung

Ein 30x49, 5 cm großer PET-Vliesstoff (Dicke: 20 µm, Flächengewicht: 11,3 g/m²) wurde mit obiger Paste mittels eines Rakelverfahrens beschichtet, bei 60°C und anschließend bei 120°C getrocknet. Es wurde ein imprägnierter Vliesstoff mit einem Flächengewicht von 30 g/m² und einer Dicke von 32 µm erhalten. Die berechnete Porosität betrug 42,1 %.

### Vergleichsbeispiel 3

Zu 200 Teilen einer 60 % PTFE Dispersion (Dyneon TF 5032R, Fa. 3M, mittlere Partikelgröße 160 nm) wurden unter ständigem Rühren 180 Teile einer 1% CMC (Carboxymethylcellulose) Lösung gegeben. Daraufhin wurden 50 Teile einer 59% PVDF (Polyvinylidenfluorid) Dispersion (KYNAR 301 F, Fa. Arkema, mittlere Partikelgröße 0,25 µm), ebenfalls unter Rühren, hinzugefügt. Die Lösung wurde 2 Stunden gerührt und mindestens 24 Stunden auf Stabilität getestet. Die Viskosität der erhaltenen Lösung betrug 350 cP und hatte einen pH-Wert von 9,9.

### Beschichtung

Ein 15 cm breiter PET-Vliesstoff (Dicke: 20µm, Flächengewicht: 11,3 g/m²) wurde mittels eines Walzenbeschichtungsverfahren kontinuierlich beschichtet und bei 120°C getrocknet.
Es wurde ein imprägnierter Vliesstoff mit einem Flächengewicht von 40 g/m² und einer Dicke von 42 □m erhalten. Die berechnete Porosität betrug 47%.

### Vergleichsbeispiel 4

Zu 200 Teilen einer 57 % PVDF Dispersion (KYNAR 301 F, Fa. Arkema, mittlere Partikelgröße 0,25 µm) wurden unter ständigem Rühren mit einem Flügelrührer 200 Teile einer 2% PVP (Polyvinylpyrrolidon) Lösung (Luvitec K90, Fa. BASF) gegeben. Die Lösung wurde 2 Stunden gerührt und mindestens 24 Stunden auf Stabilität getestet. Die Viskosität der erhaltenen Lösung betrug 150 cP und hatte einen pH-Wert von 7,1.

### Beschichtung

Ein 15 cm breiter PET-Vliesstoff (Dicke: 20 µm, Flächengewicht: 11,3 g/m²) wurde mittels eines Walzenbeschichtungsverfahren kontinuierlich beschichtet und bei 120°C getrocknet.
Es wurde ein imprägnierter Vliesstoff mit einem Flächengewicht von 26,5 g/m² und einer Dicke von 30 µm erhalten. Die mittlere Porengröße betrug 0,18 µm und die berechnete Porosität 44%.

### Vergleichsbeispiel 5

Zu 180 Teilen einer 1% CMC (Carboxymethylcellulose) Lösung wurden 150 Teile einer 60% Aluminiumoxiddispersion (Al2O3) (mittlere Partikelgröße 0,7 µm) gegeben und für 30 Minuten gerührt. Daraufhin wurden 35 Teile einer 59% PVDF (Polyvinylidenfluorid) Dispersion (KYNAR 301 F, Fa. Arkema, mittlere Partikelgröße 0,25 µm), ebenfalls unter Rühren, hinzugefügt. Die Lösung wurde 2 Stunden gerührt und mindestens 24 Stunden auf Stabilität getestet. Die Viskosität der erhaltenen Lösung betrug 150 cP und hatte einen pH-Wert von 9,9.

### Beschichtung

Ein 15 cm breiter PET-Vliesstoff (Dicke: 20µm, Flächengewicht: 11,3 g/m²) wurde mittels eines Walzenbeschichtungsverfahren mit obiger Lösung kontinuierlich beschichtet und bei 120°C getrocknet.
Es wurde ein imprägnierter Vliesstoff mit einem Flächengewicht von 26,6 g/m² und einer Dicke von 34 µm erhalten. Die mittlere Porengröße betrug 0,22 µm und die berechnete Porosität 69%.

### Vergleichsbeispiel 6

Zu 50 Teilen einer 16,7 % PVP Lösung (Luvitec K90, Fa. BASF) wurden unter ständigem Rühren 62 Teile PVDF Pulver (Polyvinylidenfluorid, KYNAR 301 F, Fa. Arkema, mittlere Partikelgröße 0,25 µm) und 87 Teile entionisiertes Wasser gegeben. Der Ansatz wurde 4 Stunden stark gerührt und mindestens 24 Stunden auf Stabilität getestet. Die Viskosität der erhaltenen Beschichtungspaste betrug 3000 cP.

### Beschichtung

Ein 21 cm x 29,7cm großer PET-Vliesstoff (Dicke: 12 µm, Flächengewicht: 9,2 g/m²) wurde mit Hilfe eines Laborakels (Geschwindigkeit 20 m/min) beschichtet und bei 120°C getrocknet.

Es wurde ein imprägnierter Vliesstoff mit einem Flächengewicht von 17 g/m² und einer Dicke von 25 µm erhalten. Die berechnete Porosität betrug 53%.

### Beispiel 7

Zu 50 Teilen einer 16,7 % PVP Lösung (K90) wurden unter ständigem Rühren 13 Teile PVDF Pulver (Polyvinylidenfluorid, KYNAR 301 F, Fa. Arkema, mittlere Partikelgröße 0,25 µm) und 4 Teile PVP K30 (Luvitec K30, Fa. BASF) gegeben. Der Ansatz wurde 4 Stunden stark gerührt und mindestens 24 Stunden auf Stabilität getestet.

### Beschichtung

Ein 21 cm x 29,7cm großer PET-Vliesstoff (Dicke: 12 µm, Flächengewicht: 9,2 g/m²) wurde mit obiger Lösung getränkt, durch ein Presswalzwerk geführt (Druck: 1 bar), bei 120°C getrocknet und anschließend bei 160°C kalandriert.

Es wurde ein imprägnierter Vliesstoff mit einem Flächengewicht von 24 g/m² und einer Dicke von 26 µm erhalten. Die berechnete Porosität betrug 42% und die mittlere Porengröße 0,19 µm.

**Tabelle 1: Übersicht Beispiele 1 bis 7**

| *Muster* | *Verfahren* | *Dicke [*µm*]* | *Gewicht [g*/*m²]* | *Schrumpf [% nach 10min @ 120°C]* | *Porosität [%]* | *Mittlere Porengrö* ß*e [*µm] |
|---|---|---|---|---|---|---|
| *Bsp. 1* | Imprägnieren | 27 | 23 | | 50,3 | |
| *Bsp. 2* | Rakeln | 32 | 30 | | 42,1 | |
| *Bsp. 3* | Walzenbeschichtung | 42 | 40 | | 47 | |
| *Bsp. 4* | Walzenbeschichtung | 30 | 26,5 | 1,3 | 44 | 0,18 µm |
| *Bsp. 5* | Walzenbeschichtung | 34 | 26,6 | 0 | 69 | 0,22 µm |
| *Bsp. 6* | Rakeln | 25 | 17 | | 53 | |
| *Bsp. 7* | Imprägnieren | 26 | 24 | 1,2 | 42 | 0,19 µm |

### Beispiel 8:

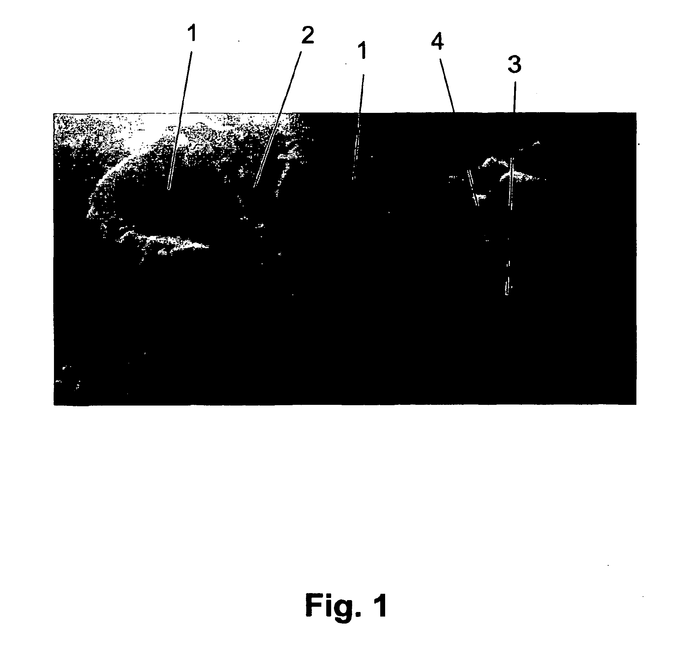

Fig. 1 zeigt eine Lage mit einem Grundkörper aus Vliesstoff, wobei der Grundkörper aus Fasern 1 besteht und erste durch die Fasern 1 gebildete Poren 2 aufweist, wobei der Grundkörper zumindest teilweise mit Partikeln 3 befüllt ist und wobei die Partikel 3 die ersten Poren 2 zumindest teilweise ausfüllen und mit Partikeln 3 befüllte Bereiche 4 ausbilden.

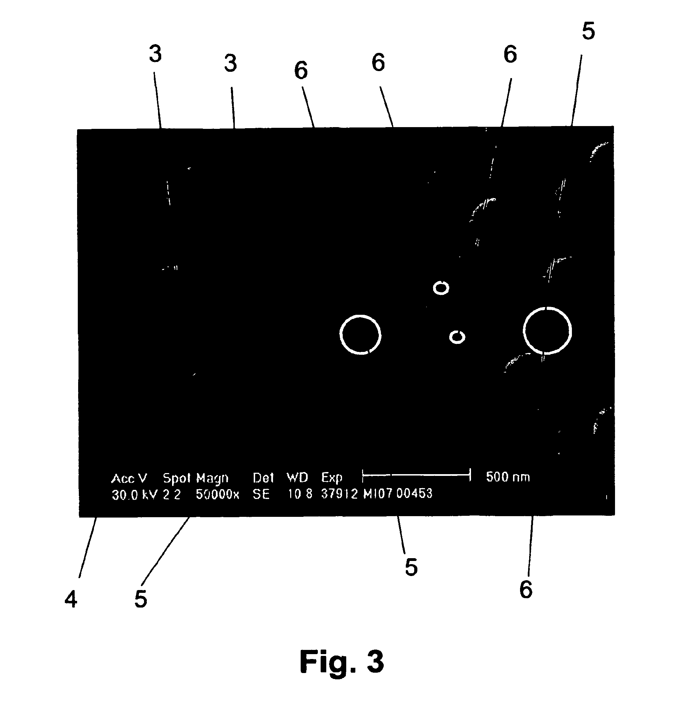

Die Fig. 3 zeigt einen befüllten Bereich 4 in einer vergrößerte Ansicht. Mit Bezug auf Fig. 3 bilden die Partikel 3 in den befüllten Bereichen 4 zweite Poren 5 aus, wobei der mittlere Durchmesser der Partikel 3 größer als die mittlere Porengröße der Mehrzahl der zweiten Poren 5 ist. Die Partikel 3 sind kugelförmig und neigen bereichsweise zur Ausbildung einer dichtesten Kugelpackung.

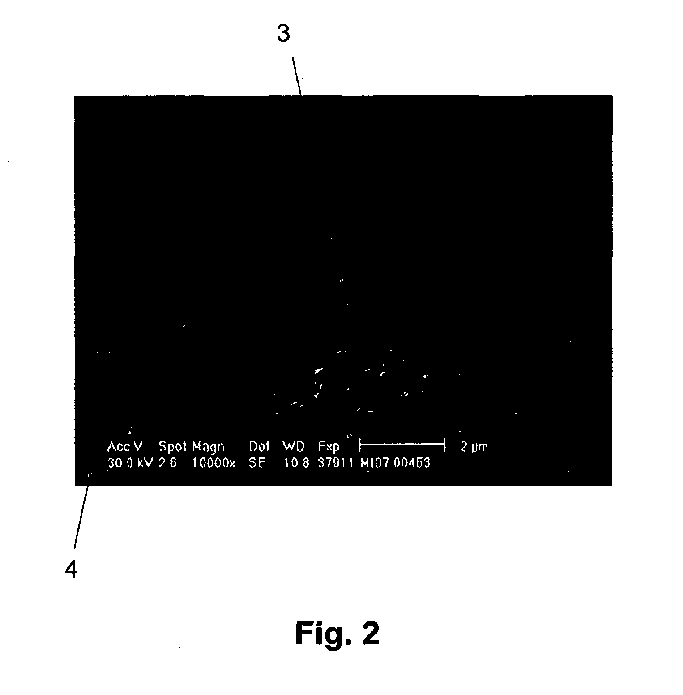

Fig. 2 zeigt eine Beschichtung aus den Partikeln 3, die auf dem Vliesstoff aufgebracht ist.

Die Fig. 1 bis 3 zeigen Rasterelektronenmikroskop-Aufnahmen einer Lage mit einem Vliesstoff, dessen Fasern 1 aus Polyester gefertigt sind. Die Partikel 3 sind kugelförmig ausgebildet und bilden bereichsweise Agglomerate, welche die ersten Poren 2 des Vliesstoffs ausfüllen. Die Fasern 1 zeigen einen mittleren Durchmesser von weniger als 12 µm. Die Lage weist eine Dicke von 25 µm auf. Sie zeigt einen Schrumpf in Querrichtung von weniger als 1 % bei einer Temperatur von 170° C.

Der mittlere Durchmesser der Partikel 3 beträgt 200 nm. Die Partikel 3 bestehen aus Polyvinylidenfluorid und wurden durch einen Binder aus Polyvinylpyrrolidon an den Fasern 1 befestigt.

Der mittlere Durchmesser der Partikel 3 wird aus der Anzahl der Partikel 3 in dem befüllten Bereich 4 ermittelt. Bevorzugt zeigen die Partikel 3 eine enge Verteilungskurve, das heisst einen mittleren Durchmesser mit geringer Standardabweichung. Die mittleren Porengrößen der meisten, nämlich der Mehrzahl, der zweiten Poren 5 ist geringer als 200 nm. Unter mittlerer Porengröße einer zweiten Pore 5 wird der Durchmesser einer fiktiven Kugel 6 verstanden, welche das gleiche Volumen wie die Pore 5 aufweist. Die fiktive Kugel 6 liegt derart zwischen den Partikeln 3, dass sie die Oberflächen der benachbarten Partikel 3 berührt. Fiktive Kugeln 6, welche die Dimension der Poren 5 kennzeichnen, sind in Fig. 3 als schwarz-umrandete Hohlkreise dargestellt.

Eine Verteilungskurve, deren x-Achse die mittleren Porengrößen der zweiten Poren 5 und deren y-Achse die Anzahl bzw. Häufigkeit der mittleren Porengrößen zeigt, würde belegen, dass mehr als 50% der zweiten Poren 5 mittlere Porengrößen zeigen, die unterhalb von 200 nm liegen.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass das zuvor rein willkürlich gewählte Ausführungsbeispiel lediglich zur Erörterung der erfindungsgemäßen Lehre dient, diese jedoch nicht auf dieses Ausführungsbeispiel einschränkt.

## Patentansprüche

1. Lage mit einem Grundkörper aus Vliesstoff, wobei der Grundkörper aus Fasern (1) besteht und erste durch die Fasern (1) gebildete Poren (2) aufweist, wobei der Grundkörper zumindest teilweise mit Partikeln (3) befüllt ist, wobei die Partikel (3) die ersten Poren (2) zumindest teilweise ausfüllen und mit Partikeln (3) befüllte Bereiche (4) ausbilden, wobei die Partikel (3) in den befüllten Bereichen (4) zweite Poren (5) ausbilden, wobei der mittlere Durchmesser der Partikel (3) größer als die mittlere Porengröße der Mehrzahl der zweiten Poren (5) ist, wobei zumindest ein Teil der befüllten Bereiche (4) als Beschichtung des Grundkörpers mit den Partikeln (3) ausgebildet ist, wobei die Partikel (3) aus organischen Polymeren gefertigt sind, die aus der Gruppe Polyacetale, Polycycloolefin-Copolymere, Polyester, Polyimide, Polyetherketone, Polycarbonsäuren, Polycarboxylate, Kautschuke, halogenierte Polymere und ungesättigte Polymere, sowie Copolymere und Gemische davon und/ oder aus der Gruppe Polypropylen, Polyvinylpyrrolidon, Polyvinylidenfluorid, Polyester, fluorierte Polymere, chlorierte Polymere, Polytetrafluorethylen, Perfluor-Ethylen-Propylen (FEP), Polystyrol, Styrolbutadiencopolymere, Polyacrylat, Nitrilbutadienpolymere, Polymethacrylate, Polyetheramide, Polyetherimide, Polyetherketone, Styrolbutadienkautschuk, EPDM-Kautschuk, fluorierter Kautschuk, sowie Copolymere und Gemische der zuvor genannten Polymere ausgewählt sind, wobei das Flächengewicht der Lage zwischen 10 und 60 g/m² liegt und wobei der Grundkörper kalandriert ist,
**gekennzeichnet durch** eine Kalandrierung, wobei die an der Oberfläche des Vliesstoffs eingesetzten Partikel nach der Kalandrierung Abplattungen zeigen.

2. Lage nach Anspruch 1, **dadurch gekennzeichnet, dass** die Partikel (3) kugelförmig ausgebildet sind.

3. Lage nach Anspruch 1 oder 2, **dadurch gekennzeichnet, dass** die Partikel (3) im Grundkörper flächig homogen verteilt sind.

4. Lage nach einem der Ansprüche 1 bis 3, **dadurch gekennzeichnet, dass** die Partikel (3) durch einen Binder aus organischen Polymeren mit dem Vliesstoff verbunden sind, die aus der Gruppe der Polyester, Polyamide, Polyether, Polycarboxylate, Polycarbonsäuren, Polyvinylverbindungen, Polyolefinen, Kautschuken, halogenierten Polymeren und ungesättigten Polymeren sowie Copolymeren und Gemischen davon ausgewählt sind.

5. Lage nach einem der Ansprüche 1 bis 4, **dadurch gekennzeichnet, dass** die Partikel (3) durch einen Binder aus organischen Polymeren mit dem Vliesstoff verbunden sind, die aus der Gruppe Polyvinylpyrrolidon, Polyacrylsäure, Polyacrylat, Polymethacrylsäure, Polymethacrylat, Polystyrol, Polyvinylalkohol, Polyvinylacetat, Polyacrylamid und Copolymere aus den vorgenannten, Cellulose und deren Derivate, Polyether, Phenolharz, Melaminharz, Polyuretha, Nitrilkautschuk (NBR), Styrolbutadienkautschuk (SBR), Latex, fluorierte Polymere, chlorierte Polymeren, Siloxane, Silylverbindungen, Silane, sowie Copolymere und Gemische aus den vorgenannten, ausgewählt sind.

6. Lage nach einem der Ansprüche 1 bis 5, **dadurch gekennzeichnet, dass** der Schmelzpunkt des Binders unter den Schmelzpunkten der Partikel (3) und/ oder der Fasern (1) liegt.

7. Lage nach einem der Ansprüche 1 bis 6, **dadurch gekennzeichnet, dass** die Partikel (3) einen mittleren Durchmesser im Bereich von 0,01 und 10 µm aufweisen.

8. Lage nach einem der Ansprüche 1 bis 7, **dadurch gekennzeichnet, dass** die Fasern (1) des Vliesstoffs aus organischen Polymeren gefertigt sind, die aus der Gruppe Polybutylterephtalat, Polyethylenterephtalat, Polyacrylnitril, Polyvinylidenfluorid, Polyetheretherketon, Polyethylennaphtalat, Polysulfon, Polyimid, Polyester, Polypropylen, Polyoxymethylen, Polyamid, Polyvinylidenfluorid oder Polyvinylpyrrolidon ausgewählt sind.

9. Lage nach einem der Ansprüche 1 bis 8, **dadurch gekennzeichnet, dass** die mittlere Länge der Fasern (1) des Vliesstoffs deren mittleren Durchmesser um mindestens das zweifache, vorzugsweise ein Vielfaches, übersteigt.

10. Lage nach einem der Ansprüche 1 bis 9, **dadurch gekennzeichnet, dass** mindestens 90% der Fasern (1) des Vliesstoffs einen mittleren Durchmesser von höchstens 12 µm aufweisen.

11. Lage nach einem der Ansprüche 1 bis 10, **dadurch gekennzeichnet, dass** mindestens 40% der Fasern (1) des Vliesstoffs einen mittleren Durchmesser von höchstens 8 µm aufweisen.

12. Lage nach einem der Ansprüche 1 bis 11, **gekennzeichnet durch** eine Dicke von höchstens 100 µm, bevorzugt von höchstens 60 µm und besonders bevorzugt von 25 µm.

13. Lage nach einem der Ansprüche 1 bis 12, **gekennzeichnet durch** eine Porosität von mindestens 25 %, bevorzugt von mindestens 35 %.

14. Lage nach einem der Ansprüche 1 bis 13, **dadurch gekennzeichnet, dass** die ersten und die zweiten Poren (2, 5) ein labyrinthartiges Gefüge ausbilden.

15. Lage nach einem der Ansprüche 1 bis 14, **gekennzeichnet durch** eine Porengröße der zweiten Poren (5) von höchstens 3 µm, bevorzugt von höchstens 1 µm.

16. Lage nach einem der Ansprüche 1 bis 14, **gekennzeichnet durch** eine Höchstzugkraft von mindestens 15 N/5cm in Längsrichtung.

17. Verfahren zur Herstellung einer Lage nach einem der Ansprüche 1 bis 16, wobei
a) zunächst eine Lösung oder Dispersion der Partikel (3) und gegebenenfalls eines Binders hergestellt wird,
b) die Fasern (1) mit der Dispersion beschichtet werden und
c) der beschichtete Vliesstoff gegebenenfalls getrocknet und/oder erwärmt wird.

18. Verwendung einer Lage nach einem der Ansprüche 1 bis 16 als Separator in Brennstoffzellen. Batterien oder Kondensatoren, als Gasdiffusionsschicht oder als Membran.

## Claims

1. Ply having a foundational structure composed of a fibrous nonwoven web fabric, the foundational structure consisting of fibres (1) and having first pores (2) formed by the fibres (1), the foundational structure being at least partially filled with particles (3), which particles (3) at least partially fill the first pores (2) and form regions (4) filled with particles (3), the particles (3) in the filled regions (4) forming second pores (5), the average diameter of the particles (3) being greater than the average pore size of the majority of the second pores (5), at least a portion of the filled regions (4) being configured as a coating of the foundational structure with the particles (3), wherein the particles (3) are fabricated from organic polymers selected from the group consisting of polyacetals, polycycloolefin copolymers, polyesters, polyimides, polyether ketones, polycarboxylic acids, polycarboxylates, rubbers, halogenated polymers and unsaturated polymers, and also copolymers and mixtures thereof and/or from the group consisting of polypropylene, polyvinylpyrrolidone, polyvinylidene fluoride, polyester, fluorinated polymers, chlorinated polymers, polytetrafluoroethylene, perfluoro-ethylenepropylene (FEP), polystyrene, styrene-butadiene copolymers, polyacrylate, nitrile-butadiene polymers, polymethacrylates, polyether amides, polyether imides, polyether ketones, styrene-butadiene rubber, EPDM rubber, fluorinated rubber, and also copolymers and mixtures of the aforementioned polymers, wherein the basis weight of the ply is between 10 and 60 g/m² and the foundational structure having been calendered, **characterized by** a calendaring wherein the particles used at the surface of the fibrous nonwoven web fabric exhibit flattening after calendering.

2. Ply according to Claim 1, **characterized in that** the particles (3) are spherical in configuration.

3. Ply according to Claim 1 or 2, **characterized in that** the particles (3) form a sheetlike homogeneous distribution in the foundational structure.

4. Ply according to any one of Claims 1 to 3, **characterized in that** the particles (3) are united with the fibrous nonwoven web fabric via a binder composed of organic polymers selected from the group consisting of polyesters, polyamides, polyethers, polycarboxylates, polycarboxylic acids, polyvinyl compounds, polyolefins, rubbers, halogenated polymers and unsaturated polymers, and also copolymers and mixtures thereof.

5. Ply according to any one of Claims 1 to 4, **characterized in that** the particles (3) are united with the fibrous nonwoven web fabric via a binder composed of organic polymers selected from the group consisting of polyvinylpyrrolidone, polyacrylic acid, polyacrylate, polymethacrylic acid, polymethacrylate, polystyrene, polyvinyl alcohol, polyvinyl acetate, polyacrylamide and copolymers of the aforementioned, cellulose and its derivatives, polyethers, phenolic resin, melamine resin, polyurethane, nitrile rubber (NBR), styrene-butadiene rubber (SBR), latex, fluorinated polymers, chlorinated polymers, siloxanes, silyl compounds, silanes, and also copolymers and mixtures of the aforementioned.

6. Ply according to any one of Claims 1 to 5, **characterized in that** the melting point of the binder is below the melting points of the particles (3) and/or the fibres (1).

7. Ply according to any one of Claims 1 to 6, **characterized in that** the particles (3) have an average diameter in the range from 0.01 to 10 µm.

8. Ply according to any one of Claims 1 to 7, **characterized in that** the fibres (1) of the fibrous nonwoven web fabric are fabricated from organic polymers selected from the group consisting of polybutyl terephthalate, polyethylene terephthalate, polyacrylonitrile, polyvinylidene fluoride, polyether ether ketone, polyethylene naphthalate, polysulfone, polyimide, polyester, polypropylene, polyoxymethylene, polyamide, polyvinylidene fluoride and polyvinylpyrrolidone.

9. Ply according to any one of Claims 1 to 8, **characterized in that** the average length of the fibres (1) of the fibrous nonwoven web fabric exceeds their average diameter by at least a factor of two or more, preferably by a multiple.

10. Ply according to any one of Claims 1 to 9, **characterized in that** at least 90% of the fibres (1) of the fibrous nonwoven web fabric have an average diameter of not more than 12 µm.

11. Ply according to any one of Claims 1 to 10, **characterized in that** at least 40% of the fibres (1) of the fibrous nonwoven web fabric have an average diameter of not more than 8 µm.

12. Ply according to any one of Claims 1 to 11, **characterized by** a thickness of not more than 100 µm, preferably of not more than 60 µm and more preferably of 25 µm.

13. Ply according to any one of Claims 1 to 12, **characterized by** a porosity of at least 25%, preferably of at least 35%.

14. Ply according to any one of Claims 1 to 13, **characterized in that** the first and second pores (2, 5) form a labyrinthine microstructure.

15. Ply according to any one of Claims 1 to 14, **characterized by** a pore size of not more than 3 µm and preferably of not more than 1 µm for the second pores (5).

16. Ply according to any one of Claims 1 to 14, **characterized by** an ultimate tensile strength force of at least 15 N/5 cm in the longitudinal direction.

17. Process for producing a ply according to any one of Claims 1 to 16, which process comprises
a) initially a solution or dispersion of the particles (3) and optionally of a binder being produced,
b) the fibres (1) being coated with the dispersion, and
c) the coated fibrous nonwoven web fabric being optionally dried and/or heated.

18. Use of a ply according to any one of Claims 1 to 16 as a separator in fuel cells, batteries or capacitors, as a gas diffusion layer or as a membrane.

## Revendications

1. Couche comprenant un corps de base composé d'un non-tissé, le corps de base étant constitué de fibres (1) et présentant des premiers pores (2) formés par les fibres (1), le corps de base étant rempli au moins en partie avec des particules (3), les particules (3) remplissant au moins en partie les premiers pores (2) et formant des zones (4) remplies de particules (3), les particules (3) formant des seconds pores (5) dans les zones remplies (4), le diamètre moyen des particules (3) étant supérieur à la taille de pore moyenne de la majorité des seconds pores (5), au moins une partie des zones remplies (4) étant sous la forme d'un revêtement du corps de base avec les particules (3), les particules (3) étant fabriquées en polymères organiques, qui sont choisis dans le groupe constitué par les polyacétals, les copolymères de polycyclooléfine, les polyesters, les polyimides, les polyéthercétones, les acides polycarboxyliques, les polycarboxylates, les caoutchoucs, les polymères halogénés et les polymères insaturés, ainsi que leurs copolymères et leurs mélanges et/ou dans le groupe constitué par le polypropylène, la polyvinylpyrrolidone, le polyfluorure de vinylidène, les polyesters, les polymères fluorés, les polymères chlorés, le polytétrafluoroéthylène, le perfluoro-éthylène-propylène (FEP), le polystyrène, les copolymères styrène-butadiène, le polyacrylate, les polymères de nitrile-butadiène, les polyméthacrylates, les polyétheramides, les polyétherimides, les polyéthercétones, le caoutchouc styrène-butadiène, le caoutchouc EPDM, le caoutchouc fluoré, ainsi que les copolymères et les mélanges des polymères susmentionnés, la masse surfacique de la couche étant entre 10 et 60 g/m² et le corps de base étant calandré, **caractérisée par** un calandrage, les particules mises en place à la surface du non-tissé présentant après le calandrage des aplatissements.

2. Couche selon la revendication 1, **caractérisée en ce que** les particules (3) sont sous forme sphérique.

3. Couche selon la revendication 1 ou 2, **caractérisée en ce que** les particules (3) sont réparties de manière laminaire homogène dans le corps de base.

4. Couche selon l'une quelconque des revendications 1 à 3, **caractérisée en ce que** les particules (3) sont reliées avec le non-tissé par un liant en polymères organiques, qui sont choisis dans le groupe constitué par les polyesters, les polyamides, les polyéthers, les polycarboxylates, les acides polycarboxyliques, les composés de polyvinyle, les polyoléfines, les caoutchoucs, les polymères halogénés et les polymères insaturés, ainsi que leurs copolymères et leurs mélanges.

5. Couche selon l'une quelconque des revendications 1 à 4, **caractérisée en ce que** les particules (3) sont reliées avec le non-tissé par un liant en polymères organiques, qui sont choisis dans le groupe constitué par la polyvinylpyrrolidone, l'acide polyacrylique, le polyacrylate, l'acide polyméthacrylique, le polyméthacrylate, le polystyrène, l'alcool polyvinylique, le polyacétate de vinyle, le polyacrylamide et leurs copolymères, la cellulose et ses dérivés, le polyéther, la résine de phénol, la résine de mélamine, le polyuréthane, le caoutchouc de nitrile (NBR), le caoutchouc de styrène-butadiène (SBR), le latex, les polymères fluorés, les polymères chlorés, les siloxanes, les composés de silyle, les silanes, ainsi que leurs copolymères et leurs mélanges.

6. Couche selon l'une quelconque des revendications 1 à 5, **caractérisée en ce que** le point de fusion du liant se situe sous les points de fusion des particules (3) et/ou des fibres (1).

7. Couche selon l'une quelconque des revendications 1 à 6, **caractérisée en ce que** les particules (3) présentent un diamètre moyen dans la plage allant de 0,01 à 10 µm.

8. Couche selon l'une quelconque des revendications 1 à 7, **caractérisée en ce que** les fibres (1) du non-tissé sont fabriquées en polymères organiques, qui sont choisis dans le groupe constitué par le polybutyltéréphtalate, le polyéthylène téréphtalate, le polyacrylonitrile, le polyfluorure de vinylidène, la polyétheréthercétone, le polyéthylène naphtalate, la polysulfone, le polyimide, le polyester, le polypropylène, le polyoxyméthylène, le polyamide, le polyfluorure de vinylidène ou la polyvinylpyrrolidone.

9. Couche selon l'une quelconque des revendications 1 à 8, **caractérisée en ce que** la longueur moyenne des fibres (1) du non-tissé dépasse leur diamètre moyen d'un facteur d'au moins deux, de préférence d'un facteur de quatre.

10. Couche selon l'une quelconque des revendications 1 à 9, **caractérisée en ce qu'**au moins 90 % des fibres (1) du non-tissé présentent un diamètre moyen d'au plus 12 µm.

11. Couche selon l'une quelconque des revendications 1 à 10, **caractérisée en ce qu'**au moins 40 % des fibres (1) du non-tissé présentent un diamètre moyen d'au plus 8 µm.

12. Couche selon l'une quelconque des revendications 1 à 11, **caractérisée par** une épaisseur d'au plus 100 µm, de préférence d'au plus 60 µm et de manière particulièrement préférée de 25 µm.

13. Couche selon l'une quelconque des revendications 1 à 12, **caractérisée par** une porosité d'au moins 25 %, de préférence d'au moins 35 %.

14. Couche selon l'une quelconque des revendications 1 à 13, **caractérisée en ce que** les premiers et les seconds pores (2, 5) forment une structure en labyrinthe.

15. Couche selon l'une quelconque des revendications 1 à 14, **caractérisée par** une taille de pore des seconds pores (5) d'au plus 3 µm, de préférence d'au plus 1 µm.

16. Couche selon l'une quelconque des revendications 1 à 14, **caractérisée par** une force de traction maximale d'au moins 15 N/5 cm dans la direction longitudinale.

17. Procédé de fabrication d'une couche selon l'une quelconque des revendications 1 à 16, selon lequel
a) tout d'abord une solution ou dispersion des particules (3) et éventuellement d'un liant est fabriquée,
b) les fibres (1) sont revêtues avec la dispersion et
c) le non-tissé revêtu est éventuellement séché et/ou réchauffé.

18. Utilisation d'une couche selon l'une quelconque des revendications 1 à 16 en tant que séparateur dans des piles à combustibles, des batteries ou des condensateurs, en tant que couche de diffusion de gaz ou en tant que membrane.
